Europäisches Patentamt

European Patent Office

Office européen des brevets

(19)

(11) **EP 0 612 180 B1**

(12) **FASCICULE DE BREVET EUROPEEN**

(45) Date de publication et mention
de la délivrance du brevet:
**30.07.1997   Bulletin 1997/31**

(51) Int Cl.⁶: **H04N 1/393**

(21) Numéro de dépôt: **94400307.8**

(22) Date de dépôt: **11.02.1994**

(54) **Procédé et dispositif d'impression pour télécopieur**

Verfahren und Vorrichtung zum Drucken für Telefax-Gerät

Method and apparatus for printing for telefax

(84) Etats contractants désignés:
**BE DE DK ES GB GR IE IT LU NL PT**

(30) Priorité: **15.02.1993   FR 9301670**

(43) Date de publication de la demande:
**24.08.1994   Bulletin 1994/34**

(73) Titulaire: **SAGEM SA**
**F-75783 Paris Cédex 16 (FR)**

(72) Inventeurs:
• **Vegeais, Patrick**
**F-78112 Fourqueux (FR)**

• **Frederic, Alain**
**F-95000 Cergy (FR)**

(74) Mandataire: **Fort, Jacques et al**
**CABINET PLASSERAUD**
**84, rue d'Amsterdam**
**75440 Paris Cedex 09 (FR)**

(56) Documents cités:
**WO-A-91/08639          US-A- 4 885 641**

## Description

La présente invention concerne les procédés et dispositifs d'impression pour télécopieur sur des feuilles de papier de format constant et prédéterminé. Elle concerne plus particulièrement les procédés d'impression suivant lesquels, pour chaque page de document transmis, on mémorise les pixels de l'ensemble de toutes les lignes d'analyse de chaque page à son tour, on détermine le nombre de lignes d'écartement prédéterminé à restituer et on imprime la page pixel par pixel, une ligne après l'autre.

L'invention trouve une application particulièrement importante dans les télécopieurs à impression par voie électro-photographique sur une feuille prédécoupée de format normalisé (généralement le format A4 en Europe).

Les impératifs d'impression ne permettent pas d'utiliser la totalité de la feuille. La partie utile est limitée par la nécessité de réserver quelques millimètres en bas de la feuille pour la saisir. Lorsque l'impression s'effectue par voie électro-photographique, il n'est pas possible de déposer de l'encre sur les bords latéraux du papier. Enfin, il est en général prévu d'imprimer, en haut de la feuille, une ligne d'identification de communication ou LIC. En général, la la surface utile d'une feuille de format A4 se réduit à 208 x 289 mm.

Par ailleurs, le document émis peut avoir un format supérieur au format des feuilles utilisées à la restitution : elles peuvent notamment être au format B4 ou au format américain de 330 mm de hauteur.

Dans la conception des télécopieurs actuels, on a soit ignoré le problème, auquel cas on perd de l'information lorsque des marges vierges n'ont pas été réservées sur le document émis, soit tenté d'y apporter des solutions qui ne sont pas pleinement satisfaisantes.

Parmi les solutions retenues jusqu'ici pour tenir compte de l'impossibilité d'utiliser toute la longueur, on peut citer celle connue sous le nom de "grignotage" qui est notamment décrite dans les documents WO-A-9 108 639 et US-A-4 885 641. Elle consiste à réduire la longueur à imprimer en omettant des lignes de pixels à intervalles réguliers. Cette façon de faire réduit la lisibilité et en particulier peut rendre indiscernables certaines lettres. Elle modifie la forme des figures : par exemple un cercle devient un ovale.

La présente invention vise à founir un procédé et un dispositif d'impression permettant d'utiliser de façon optimale la feuille de papier sur laquelle s'effectue l'impression. Elle propose dans ce but un procédé suivant la revendication 1.

Dans un premier mode de réalisation, l'écartement des lignes d'impression est simplement limité par la contrainte que cet écartement ne doit pas dépasser celui des lignes d'analyse (c'est-à-dire par la contrainte que seule une réduction de longueur est autorisée). Mais toute réduction de longueur déforme alors les dessins portés par la feuille. De plus, si le document analysé comporte des lignes très longues (soit que le document soit écrit jusqu'au bord, soit qu'il ait une largeur plus importante que celle de la feuille de papier de restitution), on perd de l'information sur les côtés. Une solution qui est déjà plus avantageuse consiste à réduire l'écartement des pixels le long de chaque ligne dans le même rapport que l'écartement entre lignes : on évite ainsi les déformations, mais on peut encore perdre de l'information sur les bords si le document à transmettre est court. La solution la meilleure consiste à calculer également le rapport de réduction horizontale Rh entre la largeur d'impression disponible et la largeur maximale d'analyse à restituer, à déterminer celui des deux rapports de réductions (verticale et horizontale) qui est le plus faible et à adopter, à l'impression, le rapport de réduction le plus faible pour commander l'écartement à l'impression entre lignes de pixels et l'écartement entre pixels d'une même ligne.

Dans ce cas, on fait une utilisation optimale de la surface disponible et on ne déforme pas le document d'origine. Du fait qu'aucune ligne n'est omise, il n'y a pas de dégradation de l'image.

Il est possible, bien que cette solution ne soit pas en général utile, de modifier l'écartement entre lignes et l'écartement entre pixels d'une même ligne, lors de l'impression, aussi bien dans le sens de l'agrandissement que dans le sens de la diminution (c'est-à-dire de prévoir des rapports de réduction supérieurs aussi bien qu'inférieurs à 1).

L'invention propose également un dispositif d'impression suivant la revendication 4 permettant de mettre en oeuvre le procédé ci-dessus défini, comprenant une source lumineuse (généralement une diode laser) fournissant un faisceau modulé par le signal entrant et balayant, le long d'une génératrice, à la cadence fixée par une horloge, une génératrice d'un tambour photosensible entraîné en rotation par un moteur, et comprenant des moyens pour mémoriser des données entrantes représentant les pixels successifs de toutes les lignes d'analyse d'une page de document, caractérisé par des moyens pour déterminer la longueur à reproduire du document transmis, par exemple sous forme d'un nombre de lignes d'analyse d'écartement donné et pour déterminer la largeur par exemple sous forme du nombre de pixels d'analyse, nécessaire pour ne pas tronquer en largeur l'information contenue dans toutes les lignes d'analyse, des moyens pour calculer les rapports de réduction verticale Rv et horizontale Rh à adopter pour restituer l'information utile et pour retenir le rapport le plus faible, et des moyens pour commander la fréquence de l'horloge et le moteur du tambour de façon à obtenir ledit rapport de réduction le plus faible.

L'invention sera mieux comprise à la lecture de la description qui suit d'un mode particulier de réalisation, donné à titre d'exemple non limitatif. Ce mode de réalisation utilise l'impression par voie électro-photographique ou laser. Mais il ne s'agit là que d'un exemple et l'invention est également utilisable chaque fois que l'impression s'effectue par pixels successifs sur une même ligne, une ligne après l'autre.

La description se réfère aux dessins qui l'accompagnent, dans lesquel :

- la figure 1 est un schéma de principe montrant la surface utile d'impression disponible sur une feuille de format A4, dans le cas d'une impression par voie électro-photographique utilisant une encre sèche ;
- la figure 2 est un schéma de principe montrant un dispositif d'impression de constitution générale couramment utilisée dans un télécopieur à impression laser, permettant de mettre en oeuvre l'invention ; et
- la figure 3 est un synoptique de principe.

Dans le cas d'une feuille de format A4, dont la longueur L et la largeur W sont respectivement de 297 et 210 mm, la surface disponible pour l'impression se limite généralement à $l = 289$ mm et $w = 208$ mm si une marge supérieure doit rester libre pour imprimer la ligne d'identification de communication. La marge inférieure de 3 mm est nécessaire pour permettre au dispositif d'entraînement de pincer la feuille.

Le document émis peut être du format A4, mais porter des inscriptions débordant de la zone reproductible, ou d'un format plus important, par exemple B4 ou américain.

Classiquement, à l'émission, le document est analysé ligne par ligne par une barrette de photodétecteurs, de longueur suffisante pour fournir un signal pour chaque pixel de la feuille analysée, même lorsque celle-ci est légèrement décentrée par rapport à la barrette. On utilise classiquement une barrette de 1728 photodétecteurs répartis sur 216 mm de large. Les informations représentant les pixels successifs sont transmis pixel après pixel et ligne après ligne. Ces informations sont mémorisées page par page par le télécopieur récepteur, avant reproduction de la page, en mettant en oeuvre des moyens qui ne seront pas décrits ici, car ils peuvent avoir n'importe quelle constitution classique. Par comparaison entre l'information de luminance concernant chaque pixel et un seuil, on peut déterminer si ce pixel donne une information significative ou appartient au fond du document à reproduire. Il est donc possible de déterminer la longueur $l_o$ du document portant une information et la largeur maximale $w_o$ à reproduire pour éviter des pertes d'information sur les bords.

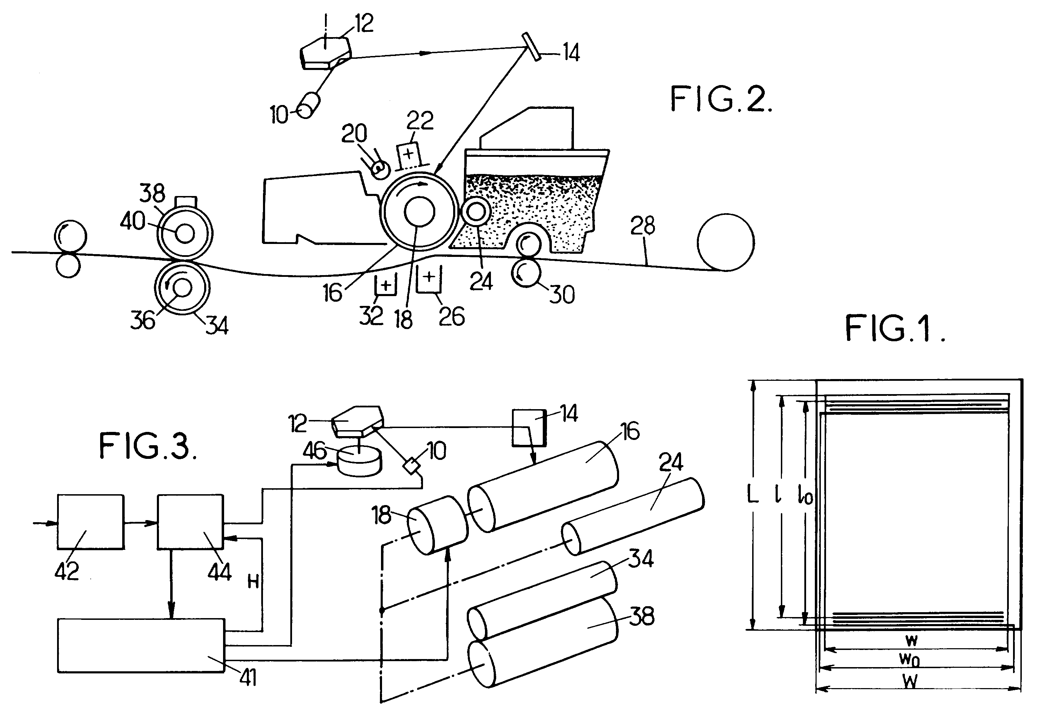

Le dispositif d'impression pour télécopieur dont le schéma de principe est montré en figures 2 et 3 comporte une source de lumière 10 (diode laser en général) fournissant un faisceau qui est focalisé puis reçu par un miroir polyédrique 12 de balayage en ligne et renvoyé par un miroir de repliement 14 sur un tambour photosensible 16 entraîné en rotation par un moteur principal 18. Ce tambour, de quelques centimètres de diamètre en général, est recouvert d'une couche d'un matériau photoconducteur (matériau organique ou sélénium).

Chaque génératrice du tambour 16 à son tour passe successivement devant une lampe 20 d'élimination de charges électrostatiques résiduelles, un générateur Corona 22 de dépôt uniforme de charges électrostatiques sur le tambour 16 et l'emplacement d'exposition au faisceau lumineux. Ce faisceau décharge la surface du tambour en chaque point d'une quantité qui est fonction de l'irradiation reçue par ce point.

Chaque génératrice du tambour passe ensuite à un emplacement de développement où l'image latente du tambour photosensible est transformée en image visible par dépôt d'une encre sèche.

Cette encre est généralement à deux composants et entraînée par un rouleau magnétique tournant à l'intérieur d'un manchon 24. L'encre adhère au tambour 16 sur les zones qui ont été exposées au faisceau de lumière, avec une densité de dépôts qui dépend du degré d'exposition. A un poste de transfert, où un générateur 26 crée une décharge Corona, l'encre sèche est transférée sur une feuille de papier 28 amenée par un mécanisme d'approvisionnement 30. Le papier, éventuellement déchargé électriquement par passage à un poste 32, traverse enfin un poste de fixation. Classiquement, l'encre sèche est fixée par pressage et chauffage. Pour cela, le poste comprend un rouleau presseur 34 entraîné par un moteur 36 (ou plus fréquemment un renvoi à partir du moteur principal 18) et un rouleau de chauffage 38 qu'un organe de chauffage central 40, généralement constitué par une lampe à halogène, maintient à une température régulée, d'environ 500°C avec les encres sèches habituelles. Une sonde détecte la température du tambour 38 et allume la lampe dès qu'elle descend au-dessous d'une valeur déterminée $\theta 0$. La lampe s'éteint lorsqu'une autre température $\theta 1$, supérieure à $\theta 0$ est dépassée.

Le dispositif d'impression comporte des moyens de commande qui sont généralement intégrés à une unité de commande 41 à microprocesseur gérant le télécopieur. Cette unité est reliée à des circuits électriques et téléphoniques de constitution générale connue. Ces circuits peuvent être regardés comme comportant un circuit 42 de détection d'appel entrant et de mémorisation d'un protocole de mise en liaison avec l'interlocuteur. Une fois la liaison réalisée, les données représentatives du document à reproduire sont reçues et mémorisées page par page dans une mémoire 44.

Pour imprimer une ligne, le faisceau lumineux est modulé par les données mémorisées pendant que le miroir est entraîné en rotation par un moteur 46. Après chaque écriture d'une ligne, l'unité de commande 41 de l'imprimante actionne le moteur classique principal 18 pour faire avancer le tambour 16 d'un intervalle déterminé et constant.

La constitution décrite jusqu'ici est courante. Mais la commande du miroir 12 et de l'avance du tambour 16 s'effectue, suivant l'invention, de façon différente de celle que l'on trouve dans les imprimantes de télécopieurs laser habituelles. Plus précisément, l'imprimante est prévue de façon à donner à la résolution d'impression horizontale et verticale une valeur permettant d'utiliser au mieux la surface disponible sur la feuille de papier à imprimer.

Dans un mode avantageux de réalisation, le moteur 18 d'entraînement du tambour photosensible 16 est un moteur asservi à courant continu, plutôt que le moteur électrique pas à pas habituel. La vitesse de rotation de ce moteur d'entraînement est commandée par l'unité de commande 41 en fonction de la résolution à obtenir, qui dépend elle-même de la réduction nécessaire pour faire tenir l'ensemble des informations analysées sur la surface disponible. Le moteur 46 peut être commandé à la fréquence d'une horloge appartenant à l'unité de commande 41.

On sait que chaque nouvelle ligne de pixels est indiquée, dans le message entrant, par un top de début de ligne. L'intervalle de temps entre deux tops de début de ligne est constant. Une solution simple consiste, une fois le rapport de réduction calculé, à :

- commander l'activation du faisceau laser, c'est-à-dire la cadence de passage d'un pixel au suivant, à partir d'une horloge externe synchronisée à partir du top de début de ligne et dont la fréquence (qui fixe la cadence de passage d'un pixel au suivant) est choisie à une valeur proportionnelle au rapport de réduction à obtenir (pour une vitesse donnée du moteur 46).
- à asservir la vitesse de rotation du moteur 18 à la résolution, de sorte que l'écart entre deux lignes est directement proportionnel à la vitesse de rotation du moteur, puisque l'intervalle de temps entre deux tops de début de ligne est constant.

Le calcul du rapport de réduction peut s'effectuer dans l'unité de commande 41 à partir des informations transmises depuis la mémoire 44 à l'issue de chaque enregistrement d'une page complète.

Si on désigne par v le nombre de lignes de la zone imprimable à l'écartement nominal et par V le nombre de lignes à imprimer (correspondant à la hauteur $l_0$) on peut déterminer le rapport de réduction vertical minimum à respecter :

$$Rv = v/V$$

De même, si on désigne par H le nombre de pixels à restituer (correspondant à la largeur $w_0$) et par h le nombre de pixels par ligne de la zone imprimable à l'écartement nominal, le rapport de réduction horizontal minimum à respecter est :

$$Rh = h/H$$

On adoptera alors le minimum de Rv et de Rh comme rapport de réduction commun dans les deux sens.

## Revendications

1. Procédé d'impression par télécopie, sur des feuilles de format constant et déterminé, suivant lequel, pour chaque page de document transmis, on mémorise les pixels de l'ensemble de toutes les lignes d'analyse de chaque page à son tour, on détermine le nombre de lignes d'écartement prédéterminé à restituer et on imprime la page pixel par pixel, une ligne après l'autre, caractérisé en ce que : on détermine la hauteur contenant une information sous forme d'un nombre de lignes d'analyse, on calcule le rapport de réduction verticale Rv à adopter pour restituer l'ensemble des lignes contenant l'information utile et on imprime la feuille avec un écartement entre lignes de pixels tel que la totalité des lignes utiles soit contenue dans la longueur utilisable.

2. Procédé selon la revendication 1, caractérisé en ce que l'on réduit l'écartement des pixels le long de chaque ligne dans le même rapport que l'écartement entre lignes.

3. Procédé selon la revendication 2, caractérisé en ce qu'on calcule également le rapport de réduction horizontale Rh entre la largeur d'impression disponible et la largeur maximale d'analyse à restituer, on détermine celui des deux rapports de réduction verticale et horizontale qui est le plus faible, et on adopte le rapport de réduction le plus faible pour commander l'écartement à l'impression entre lignes de pixels et l'écartement entre pixels d'une même ligne.

4. Dispositif d'impression pour télécopieur, comprenant une source lumineuse (10) fournissant un faisceau modulé par le signal entrant et balayant, à la cadence fixée par une horloge, une génératrice d'un tambour photosensible (16) entraîné en rotation par un moteur (18), et comprenant des moyens (44) pour mémoriser des données entrantes représentant les pixels successifs de toutes les lignes d'analyse d'une page de document, caractérisé par des moyens (41) pour déterminer la longueur à reproduire du document transmis, par exemple sous forme d'un nombre de lignes d'analyse d'écartement nominal donné, et pour déterminer la largeur par exemple sous forme du nombre de pixels d'analyse, nécessaire pour ne pas tronquer en largeur l'information contenue dans toutes les lignes d'analyse, des moyens pour calculer les rapports de réduction verticale Rv et horizontale Rh à adopter pour restituer l'information utile et pour retenir le rapport le plus faible, et des moyens pour commander la fréquence de l'horloge et le moteur du tambour de façon à obtenir ledit rapport de réduction le plus faible.

5.  Dispositif selon la revendication 4, caractérisé en ce que le moteur (18) est un moteur asservi à courant continu dont la vitesse est commandée par une unité de commande en fonction du rapport de réduction à obtenir.

6.  Dispositif selon la revendication 4 ou 5, caractérisé en ce que l'activation du faisceau est commandée par une horloge de façon à obtenir ledit rapport de réduction le plus faible.

**Patentansprüche**

1.  Druckverfahren für ein Telefax auf Papierblättern mit gleichbleibendem und vorher bestimmten Format, wobei für jede Seite des übertragenen Dokuments die Pünktchen der Gesamtheit aller Bildzeilen jeder Seite auf ihrem Weg gespeichert werden, die Zahl der vorherbestimmten wiederherzustellenden Abstandslinien bestimmt werden und die Seite Pünktchen für Pünktchen, eine Linie nach der anderen, gedruckt wird, dadurch gekennzeichnet, daß die Höhe bestimmt wird, die eine Information in Form einer Zahl von Bildzeilen enthält, das Verhältnis der vertikalen Reduktion Rv berechnet wird, die anzunehmen ist, um die Gesamtheit der die nützliche Information enthaltenden Zeilen wiederherzustellen, und das Blatt mit einem Abstand zwischen den Pünktchenzeilen derart gedruckt wird, daß die Gesamtheit der nützlichen Zeilen innerhalb der brauchbaren Länge enthalten ist.

2.  Verfahren nach Anspruch 1, dadurch gekennzeichnet, daß der Abstand der Pünktchen entlang jeder Zeile in demselben Verhältnis vermindert wird wie der Abstand zwischen den Zeilen.

3.  Verfahren nach Anspruch 2, dadurch gekennzeichnet, daß außerdem die horizontale Reduktion Rh zwischen der Größe des verfügbaren Druckes und der maximalen wiederherzustellenden Bildgröße berechnet wird, daß dasjenige der beiden vertikalen und horizontalen Reduktion, das das Kleinste ist, bestimmt wird, und daß man die kleinste Reduktion anwendet, um den Abstand zum Drucken zwischen Zeilen von Pünktchen und dem Abstand zwischen Pünktchen innerhalb derselben Zeile zu steuern.

4.  Druckvorrichtung für ein Telefaxgerät mit einer Lichtquelle (10), die ein durch das eintretende und abtastende Signal moduliertes Strahlenbündel liefert, längs eines Generators mit einer festen Kadenz durch eine Uhr mit einem photosensiblen Trommelgenerator (16), der durch einen Motor (18) drehbar angetrieben wird, und mit Mitteln (44) zum Speichern der eingehenden Daten, die die aufeinanderfolgenden Pünktchen aller Bildzeilen einer Seite des Dokumentes entsprechen, gekennzeichnet durch Mittel (41) zur Bestimmung der zu reproduzierenden Länge des übertragenen Dokuments, beispielsweise in Gestalt einer nominal angegebenen Zahl der Bildzeilenabstände, und zur Bestimmung der Größe, beispielsweise in Gestalt der Zahl der Bildpünktchen, die notwendig ist, um die Informationsgröße, die in allen Bildzahlen enthalten ist, nicht zu beschädigen, und Mittel zur Berechnung der vertikalen Reduktion Rv und der horizontalen Reduktion Rh zur Wiederherstellung der nützlichen Information und zum Erhalten des kleinsten Verhältnisses, und durch Mittel zur Steuerung der Uhrfrequenz und des Trommelmotors derart, daß man die kleinste Reduktion für die Horizontal- und Vertikalrichtungen erhält.

5.  Vorrichtung nach Anspruch 4, dadurch gekennzeichnet, daß der Motor (18) ein Gleichstrommotor ist, dessen Geschwindigkeit durch eine Steuereinheit in Abhängigkeit von der erhaltenen Reduktion gesteuert wird.

6.  Vorrichtung nach Anspruch 4 oder 5, dadurch gekennzeichnet, daß die Aktivierung des Strahlenbündels von einer Uhr gesteuert wird, derart, daß man die kleinste Reduktion erhält.

**Claims**

1.  Method for facsimile printing on paper sheets of predetermined and constant size, comprising, for each transmitted page of document, storing the pixels of all scanned lines of each page in turn, determining the number of lines having a predetermined spacing to be printed and printing the page pixel per pixel, one line after the other, characterized by determining the height which contains information as a number of scanned lines, computing the vertical reduction ratio Rv to be used for printing all lines which contain useful information and printing the sheet with a spacing between lines of pixels such that all useful lines be contained in the usable length.

2.  Method according to claim 1, characterized by reducing the spacing of pixels along each line in the same ratio as the spacing between lines.

3.  Method according to claim 2, characterized computing a horizontal reduction ratio Rh between the available printing width and the maximum scanned width to be reproduced, determining which one of the two vertical and horizontal ratios is smaller and using the smaller reduction ratio for controlling the vertical spacing between lines of pixels and the spacing between pixels of a same line during printing.

4. Printing apparatus for facsimile machine, comprising a light source (10) delivering a beam which is modulated by the input signal and scanning, at a rate fixed by a clock, a generatrix line of a photosensitive drum (16) driven in rotation by a motor (18) and comprising means (44) for storing input data which represent successive pixels of all scanned lines of a page of document,

   characterized by means (41) for determining the length to be reproduced on the transmitted document, for instance as a number of scanning lines having a given set value and for determining the length, for instance as a number of analyzed pixels, necessary to avoid truncating the information contained in all scanned lines in width, means for computing the vertical reduction ratio Rv and horizontal reduction ratio Rh to be used for reproducing the useful information and for adopting the smaller ratio, and means for controlling the frequency of the clock and the motor of the drum for obtaining said smaller reduction ratio in the horizontal and vertical directions.

5. Device according to claim 4, characterized in that the motor (18) is a DC servo-controlled motor whose speed is controlled by a control unit responsive to the reduction ratio to be obtained.

6. Device according to claim 4 or 5, characterized in that energization of the beam is controlled by a clock for obtaining said smaller reduction ratio.

FIG.1.

FIG.2.

FIG.3.